# EUROPEAN PATENT SPECIFICATION

(11) **EP 2 556 992 B1**
(45) Date of publication and mention of the grant of the patent: **29.04.2020**
(21) Application number: 12005765.8
(22) Date of filing: 08.08.2012
(51) Int. Cl.: B60N 2/28

(54) **Child safety seat**
Kindersicherheitssitz
Siège de sécurité enfant

(30) Priority: 08.08.2011 DE 202011104156 U
(43) Date of publication of application: 13.02.2013
(73) Proprietor: Britax Römer Kindersicherheit GmbH, 89077 Ulm (DE)
(72) Inventor: Maier, Dieter, 89537 Giengen (DE); Amesar, Pankaj, 28273 Charlotte (US)
(74) Representative: Bosch Jehle Patentanwaltsgesellschaft mbH

(56) References cited:
- EP-A2- 1 090 804
- WO-A1-2006/123169
- US-A1- 2004 051 356
- US-A1- 2010 109 215

## Description

This invention relates to a child safety seat for use in a vehicle. It is well known for a child safety seat to rest on a vehicle seat and to be secured thereon by the corresponding vehicle seat belt.

The disadvantage of this arrangement is that, even if the vehicle seat belt is pulled very tight during installation, the resilience of the belt, will permit undesirable movement of the child seat relative to the vehicle in the event of sudden deceleration, for example, during an accident. In order to overcome this disadvantage, it has been proposed to provide vehicle seats with standard anchorage units at agreed locations for engagement by releasable connectors which are attached to the child seat structure by rigid links. Such anchorage units will be referred to hereinafter as "standard anchorage units".

The invention relates to a child safety seat of the type comprising a child seat structure having a base support surface for resting on a vehicle seat cushion, a back support surface for abutting against the seat back of said vehicle seat and a seating surface for a child occupant, together with a rigid link projecting from the child seat structure between the base support surface and the back support surface, and a releasable connector mounted on the rigid link for engagement with a standard anchorage unit associated with the vehicle seat.

EP 0952032 A including the features of the preamble of claim 1, discloses such a child safety seat for use with two standard anchorage units located near the rear edge of the vehicle seat cushion and the bottom of the vehicle seat back. This arrangement is subject to the disadvantage that, in the event of an accident, the child seat tends to rotate about the standard anchorage units, compressing the front part of the vehicle seat cushion and allowing undesirable forward movement of the head of a child occupant of the child seat. The present invention aims to provide a child safety seat in which this disadvantage is mitigated.

US 5816651 A discloses a child seat of this type in which the rigid link is pivotally connected to a lever at a first pivot point. The lever is itself connected to the seat structure at a second pivot point. During installation of the child seat on a vehicle seat, the connector is first engaged with the standard anchorage unit with the lever in a first orientation. The lever is then moved to a second orientation, in which the second pivot point is closer to the standard anchorage unit than when the lever was in the first orientation, thereby causing the seat structure to compress the vehicle seat cushion. This has the disadvantages that installation of the child seat requires exertion of considerable force and that the vehicle seat cushion is permanently compressed.

WO 2006/123169 A1 discloses a child safety seat which comprises a child seat body having a child support portion, a base member, a link projecting from the child seat body, and a releasable connector provided on the link for engagement with an anchorage unit associated with the vehicle seat. The link is attached directly to the child seat body by a pivot connection that permits angular movement of the child seat body relative to the link about an axis, a foot prop being provided at the front of the child seat body.

According to the invention, in a child safety seat of the type described above, the rigid link is attached directly to the child seat structure solely by a pivot connection that permits predetermined angular movement of the child seat structure relative to the rigid link about an axis located above the base support surface. In addition thereto, the invention comprises a tether system that only allows a predetermined the angular movement. By means of the tether system according to the invention, a top-tether will establish a connection between the top area of the child safety seat and a predetermined achorage point in the vehicle.

In the event of sudden deceleration, operation of this arrangement differs from the prior art in that the centre of gravity of the combination of the child seat structure and the seat occupant does not rotate about the standard anchorage units at a constant radius. Instead both the front and rear edges of the base support surface are pressed downwards into the vehicle seat cushion simultaneously. By means of the installed top-tether, the rotation downwardly will be allowed but the movement to the front will be limited significantly. This results in a reduction in the distance of this centre of gravity from the anchorage units and therefore a corresponding reduction in the rotational moment exerted by the inertia of the child seat. The overall result is a reduction of the extent of forward excursion of the child's head.

The L-shaped pivoting link according to the invention will be described in detail followed by the top-tether system according to the invention which will be described.

Each rigid link is L-shaped with a first limb carrying the corresponding connector and a second limb having its free end pivotally attached to the child seat structure. In normal use, the first limb lies in a rearward continuation of the plane of the base support surface and the second limb is generally parallel to the back support surface.

The height of the pivot location above the base surface is at least 30mm so as to be greater than the reduction of the thickness of the vehicle seat cushion when it is fully compressed.

The invention provides a child safety seat according to claim 1. A further advantageous embodiment of the present invention is indicated in claim 2.

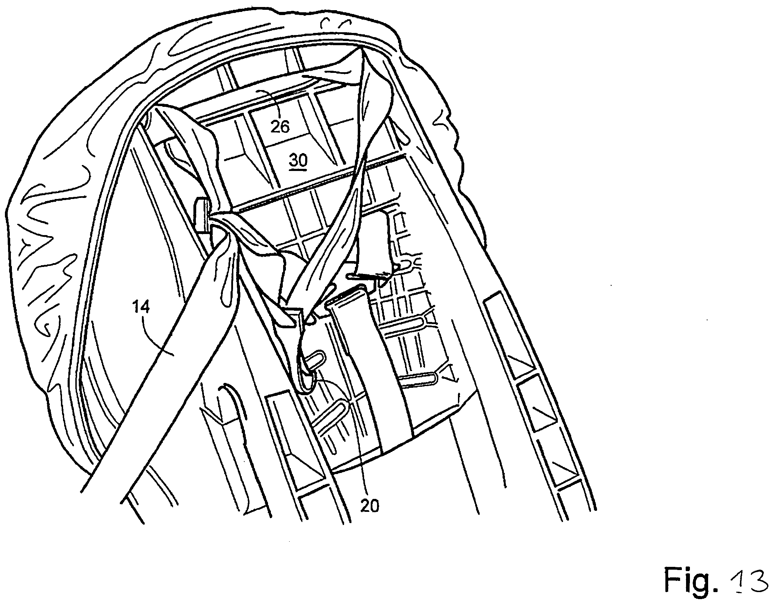

An embodiment of the invention will now be described, by way of examples, with reference to the accompanying drawings whereby figs 1 to 7 refer to the pivoting link aspects of the invention and figs. 8 to 24 refer to the top-tether aspects of the invention, in which:
Figure 1 is a perspective view of a vehicle seat equipped with standard anchorage units;
Figure 2 is a schematic side view of a known child seat installed on the vehicle seat shown in Figure 1 with a test dummy on the child seat;
Figure 3 is a side view similar to Figure 2 showing the child seat and dummy in an initial phase of movement after sudden deceleration of the vehicle;
Figure 4 is a schematic side view, similar to Figures 2 and 3 after a second phase of deceleration; and
Figures 5, 6 and 7 are side views, similar to Figures 2, 3 and 4 respectively showing a child seat in accordance with the invention on the vehicle seat shown in Figure 1.
FIG. 8 is a perspective view of a child safety seat including a tether constructed according to a first embodiment of the present invention;
FIG. 9 is a rear perspective view of the tether of FIG. 8 attached to a child safety seat;
FIG. 10 is a rear view of the tether of FIG. 8 attached to a child safety seat;
FIG. 11 is a front view of the tether of FIG. 8 attached to a backshell of a child safety seat;
FIG. 12 is a perspective view showing the tether of FIG. 8 being used to carry a child safety seat;
FIG. 13 is a perspective view of a seat with the tether of FIG. 8 after an impact fixed to the pivoting link;
FIG. 14 is a perspective view of a tether constructed in accordance with a second embodiment of the invention;
FIG. 15 is another perspective view of the tether of FIG. 14;
FIG. 16 is another perspective view of the tether of FIG. 14, showing a routing thereof;
FIG. 17 is a schematic cross-sectional view of a slide of the tether of FIG. 14, showing the routing in more detail;
FIG. 18 is a front view of the tether of FIG. 14 attached to a backshell of a child safety seat;
FIG. 19 is a rear view of the tether of FIG. 14 attached to a child safety seat;
FIG. 20 is a rear view of a tether constructed in accordance with another embodiment of the invention, attached to a child safety seat;
FIG. 21 is a front view of the tether of FIG. 20;
FIG. 22 is an enlarged front view of a portion of the tether of FIG. 20;
FIG. 23 is a fragmentary perspective view of a slide shown in FIG. 20 showing a routing of webbing therethrough; and
FIG. 24 is a fragmentary perspective view of an alternative routing of webbing through a slide.

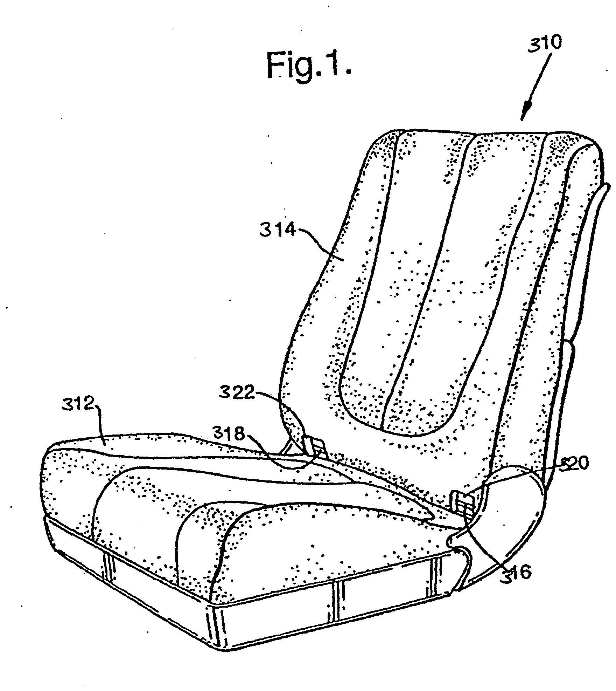

For a better understanding of the invention, the figures 1 to 8 explain the functionality of the L-shaped pivoting link without the top-tether according to the invention. The functionality of the top-tether will be decribed below in more detail followed by the combination of both elements of the invention, pivoting link and top-tether.

Figure 1 shows a vehicle seat 310 equipped with two standard anchorage units according to the first proposal. The seat 310 comprises a seat cushion 312 and a backrest 314. The two standard anchorage units comprise transversely extending rods 316 and 318 which are accessible through openings 320 and 322 in the bottom of the backrest and which are rigidly secured to the frame (not shown) of the seat 310.

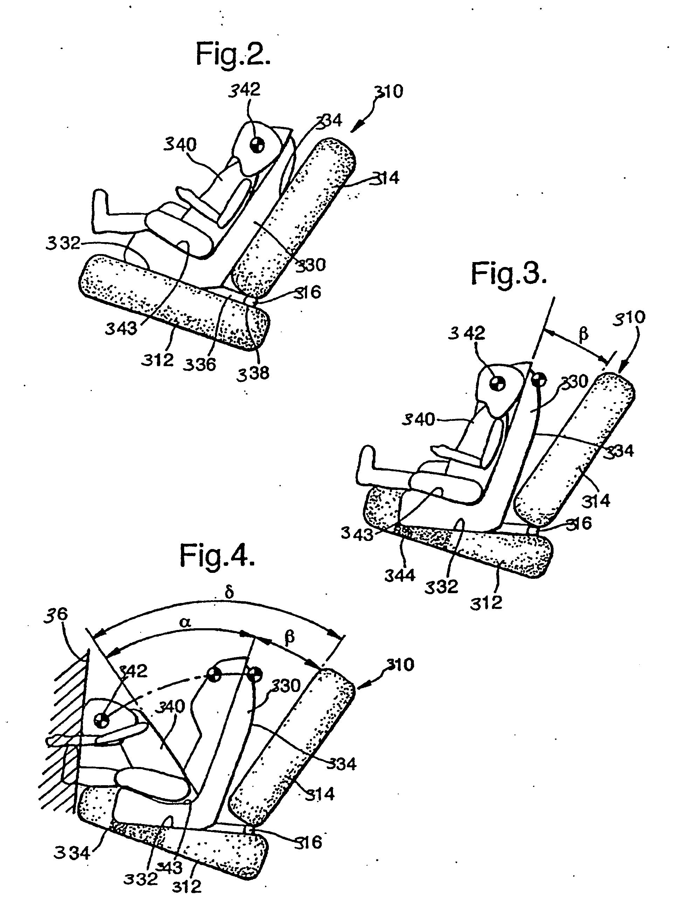

Figure 2 shows a known child seat 330 having a base support surface 332 resting on the seat cushion 312 of the vehicle seat 310 and a back support surface 334 abutting against the backrest 314. A rigid link 336 projects from the junction between the base support surface 332 and the back support surface 334 and is rigidly secured to the child seat 330 so as to be fixed parallel with the base support surface 332. A releasable connector 338 engages with the standard anchorage unit 316. A similar releasable connector (not shown), on another rigid link, engages with the other standard anchorage unit 318. The releasable connectors may be as described in EP-_A-_0952032.

The seat is occupied by a test dummy 340 having a reference marking 342 on the side of its head. The dummy 340 is retained on a seating surface 343 of the child seat 330 by a conventional harness (not shown).

If the vehicle seat 310 is subject to sudden deceleration in the normal direction of travel, the child seat 330 tends to pivot in the counter-_clockwise direction (as viewed in Figures 2 to 4) about the standard anchorage units 316 and 318. This results in compression of the part 344 of the vehicle seat cushion 312 which is under the front edge of the base surface 332 and pivotal movement of the child seat 330 through an angle β as shown in Figure 3. During the next phase of movement, the torso of the dummy 340 pivots about its pelvis through an angle α as shown in Figure 4, resulting in a total forward movement through an angle δ (equal to α + β). This movement allows the head of the dummy to come into contact with a reference surface 346 positioned in front of the vehicle seat 10, thus exceeding the extent of undesirable forward movement.

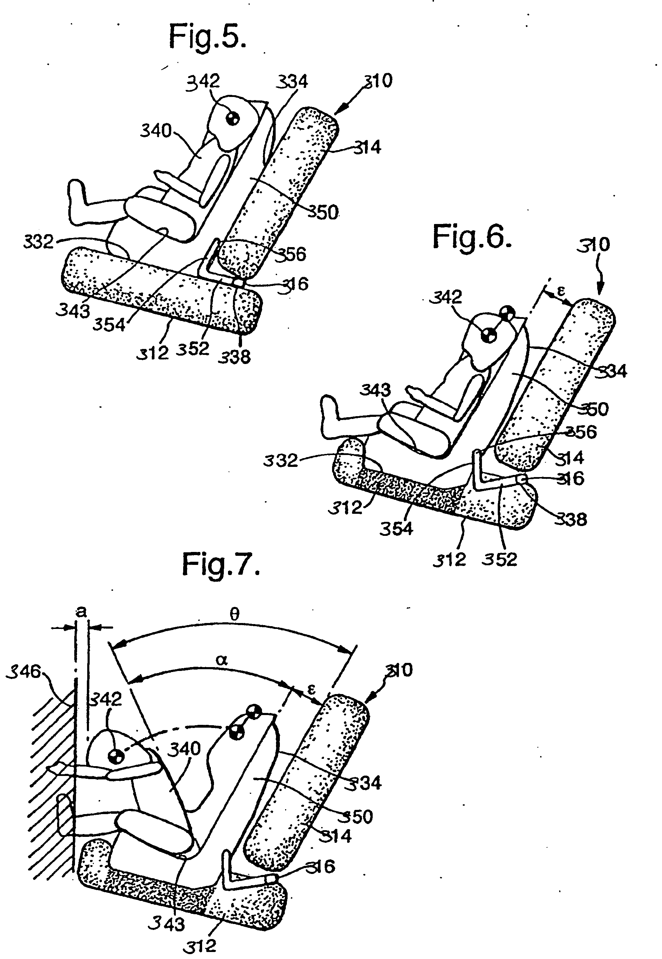

Figure 5 shows a child seat 350 in accordance with the invention, having support surfaces 332 and 334 similar to the correspondingly numbered support surfaces of the child seat. However, the releasable connector 338, which engages with the standard anchorage unit 316 is mounted on the end of one limb 352 of an L-_shaped link, the other limb 354 of which has its free end attached by a pivot connection 356 to the child seat 350 at a location adjacent to the back support surface 334 above the base support surface 332 at a distance equal to the length of the limb 354. A similar link (not shown) is provided for the connector which engages with the other standard anchorage unit 318.

Under normal conditions, the link 352, 354 is retained in the orientation shown in Figure 5 by a latch (not shown), such as ball catch which is designed to release when a load is applied. During the first phase of forward movement in the event of sudden deceleration, the link 352, 354 pivots in the counter-_clockwise direction about the standard anchorage unit 316. The pivot joint 356 allows the base support surface 332 of the seat 350 to remain generally parallel to the vehicle seat cushion 312, compressing it substantially uniformly, as shown in Figure 6. Consequently, the effective range of angular movement of the child seat 350 about the standard anchorage unit 316 is limited to ε, which is substantially less than β. The compression of such a large area of the vehicle seat cushion 312 provides a greater resistance against downward movement of the child seat 350, with the result that the front edge of the base support surface 332 is higher in Figure 6 than in Figure 3.

During the subsequent phase of movement, the torso of the dummy 340 pivots about its pelvis through the angle α, as before. The total angular movement θ of the dummy 340 is less than the angle δ, as shown in Figure 7. Consequently, the total forward movement of the head of the dummy 340 is less, leaving a clearance a from the reference surface 346, as shown in Figure 7.

In the following, the top-tether will be described in more detail.

It is another object of the invention to provide a child safety seat tether that increases the length of tether material available to stretch under crash loads.

It is another object of the invention to provide a child safety seat tether that increases the length of tether material available to stretch under crash loads.

It is another object of the invention to provide a child safety seat tether that includes a convenient carrying handle.

These and other objects of the present invention are achieved in the preferred embodiments disclosed below by providing a tether assembly for use with a child safety seat in a vehicle. The seat is of the type having a pair of spaced apart slots in a shell. The tether assembly includes a length of webbing for routing through the spaced apart slots in the shell and a first and second slides for disposition along the length of webbing to retain webbing in one of the spaced apart slots. An adjuster is connected to the length of webbing and a hook is for securing the seat in the vehicle.

According to another preferred embodiment of the invention, the first and second slides are three bar slides.

According to another preferred embodiment of the invention, the length of webbing is flexible.

According to another preferred embodiment of the invention, the webbing is routed through the slides to permit slippage.

According to another preferred embodiment of the invention, the portion of the length of webbing forming the handle is folded over and stitched together.

According to another preferred embodiment of the invention, movement of the slides is limited by the shell.

According to another preferred embodiment of the invention, stitching is included for frangibly connecting the length of webbing to itself on the back side of the shell.

According to another preferred embodiment of the invention, the slides are larger than the slots.

According to another preferred embodiment of the invention, a tether assembly for use with a child safety seat of the type having a pair of spaced apart slots in a shell includes a first length of webbing for routing through an adjuster and a second length of webbing fixed to the adjuster. A first slide is for disposition along the first length of webbing to retain webbing of the first length in one of the spaced apart slots and a second slide for disposition along the second length of webbing to retain webbing of the second length in the other of the spaced apart slots.

According to another preferred embodiment of the invention, the assembly includes a hook having an opening for receiving one of the lengths of webbing.

According to another preferred embodiment of the invention, the seat is for use in a vehicle and the hook is for securing the seat to the vehicle.

According to another preferred embodiment of the invention, the first and second slides are three bar slides.

According to another preferred embodiment of the invention, the lengths of webbing are routed through the slides to permit slippage.

According to another preferred embodiment of the invention, the slides are larger than the slots.

According to another preferred embodiment of the invention, the assembly includes stitching for frangibly coupling portions of the length of webbing together on a back side of the shell.

According to another preferred embodiment of the invention, a tether assembly for use with a child safety seat of the type having a pair of spaced apart slots in a shell includes a first length of webbing for routing through an adjuster and a second length of webbing fixed to the adjuster. A first slide is for disposition along the first length of webbing on a front side of the shell to retain webbing of the first length in one of the spaced apart slots and a second slide is for disposition along the second length of webbing on a front side of the shell to retain webbing of the second length in the other of the spaced apart slots. The assembly further includes stitching for permanently coupling portions of the first length together to retain the first slide on the front side of the shell and stitching for permanently coupling portions of the second length together to retain the second slide on the front side of the shell.

In another preferred embodiment of the invention, the assembly further includes a hook having an opening for receiving the second length of webbing.

In another preferred embodiment of the invention, the assembly includes stitching for frangibly coupling portions of the first length of webbing together and portions of the second length of webbing together on one side of the shell to provide slack loops.

In another preferred embodiment of the invention, the slack loops are provided on the front side of the shell.

In another preferred embodiment of the invention, the slack loops are provided on the back side of the shell.

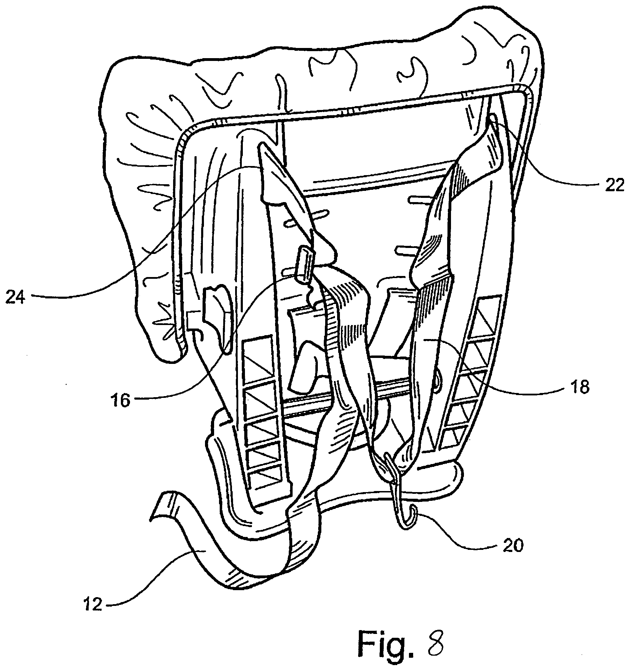

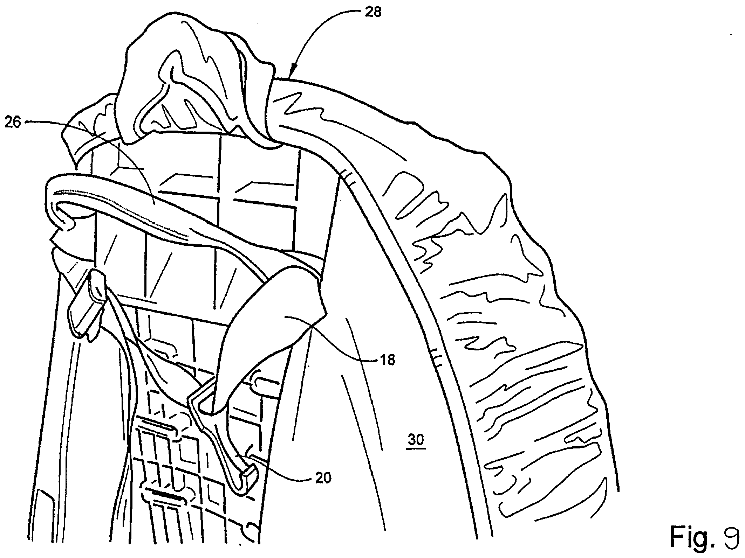

Referring now to the drawings 8 to 22 directed to the invention covering the aspects of the top-tether wherein like reference numerals indicate the same components throughout the various views, FIGS. 8 and 9 illustrate a first exemplary embodiment of a tether 10 for use with a child safety seat. Its main component is a single length of webbing 12, for example nylon or other suitable flexible material. A free end 14 of the webbing 12 is routed through an adjuster 16 of a known type, and then extends laterally to form a loop 18. A hook 20 slides along this loop 18. The webbing 12 is routed through a first slide 22 of a known type, such as a 3-bar slide, and then laterally across to a second slide 24, and finally terminates at a fixed connection to the adjuster 16. The portion of the webbing 12 between the slides 22 and 24 is folded together and sewn to define an oval or round cross-section carrying handle 26. An internal form such as padding (not shown), which may be energy absorbing, may be used to help define the handle shape. An external form may also be added to the webbing that defines the carrying handle 26, which could be made of an energy absorbing material (not shown).

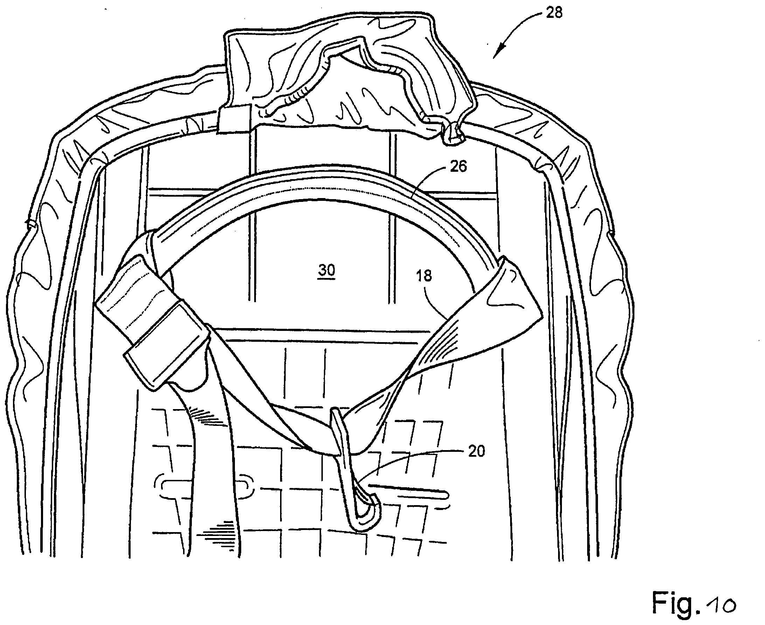

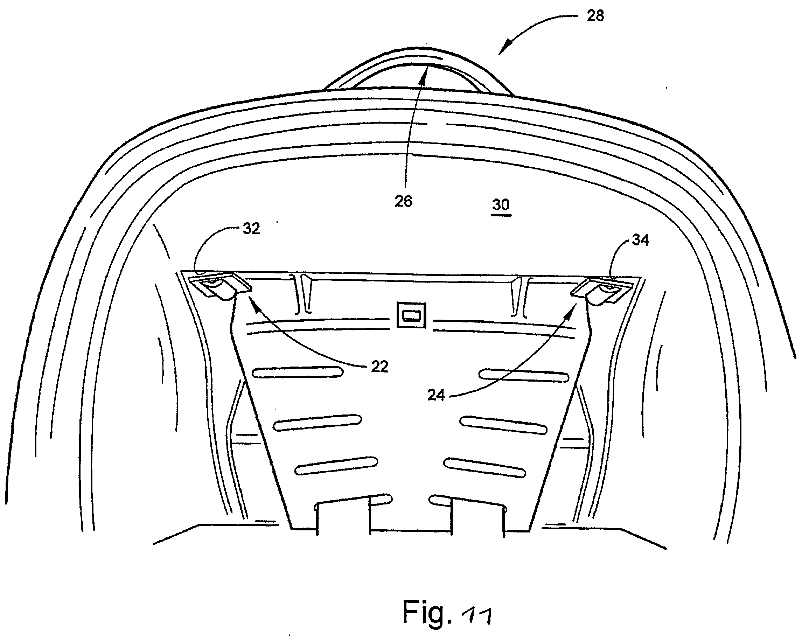

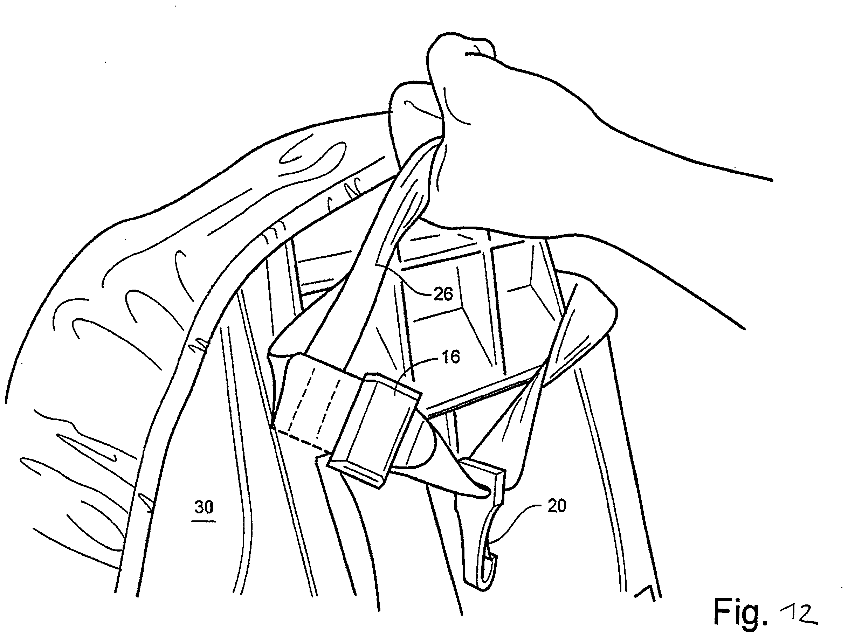

FIGS. 10 and 11 show how the tether 10 may be mounted to a child safety seat 28 which includes a backshell 30. Portions of the webbing 12 are routed through laterally-spaced-apart slots 32 and 34 in the backshell 30, which are large enough to accept the webbing 12 but smaller than the surface area of the slides 22 and 24. The slides 22 and 24 are disposed on the front side of the backshell 30 and are oriented so as to resist being pulled through the slots 32 and 34. FIG. 12 shows the carrying handle 26 being used to transport the child safety seat 28. As the carrying handle 26 is pulled, the webbing 12 tends to slip through the slides 22 and 24 such that the loop 18 effectively becomes shorter.

In use, child safety seat 28, 350 is secured to a vehicle anchor point (such as an upper LATCH anchor, not shown) as well as by the L-shaped pivoting link.

The free end 14 of the webbing 12 is then pulled through the adjuster 16 to set the length of the loop 18 as desired. In an accident, The pivoting link will force the seat 28, 350 to tension loads will be placed on the loop 18 and the hook 20 as the vehicle decelerates. The webbing 12 stretches as with a conventional tether.

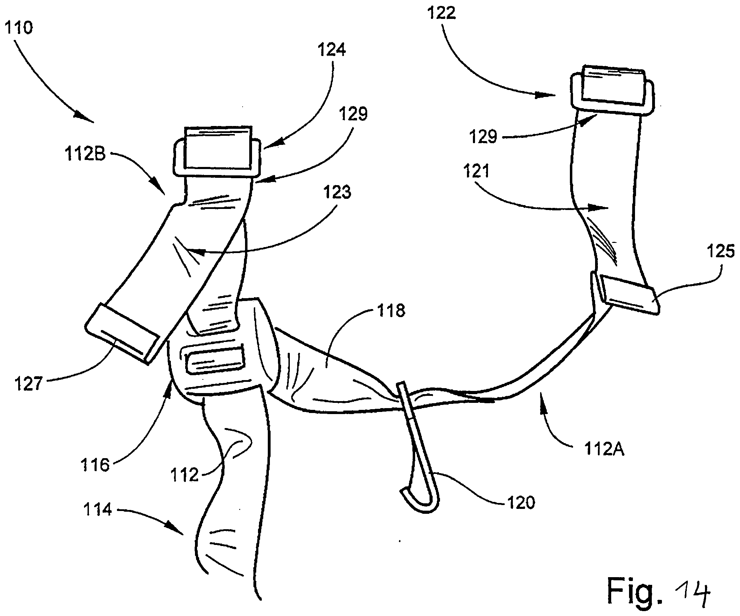

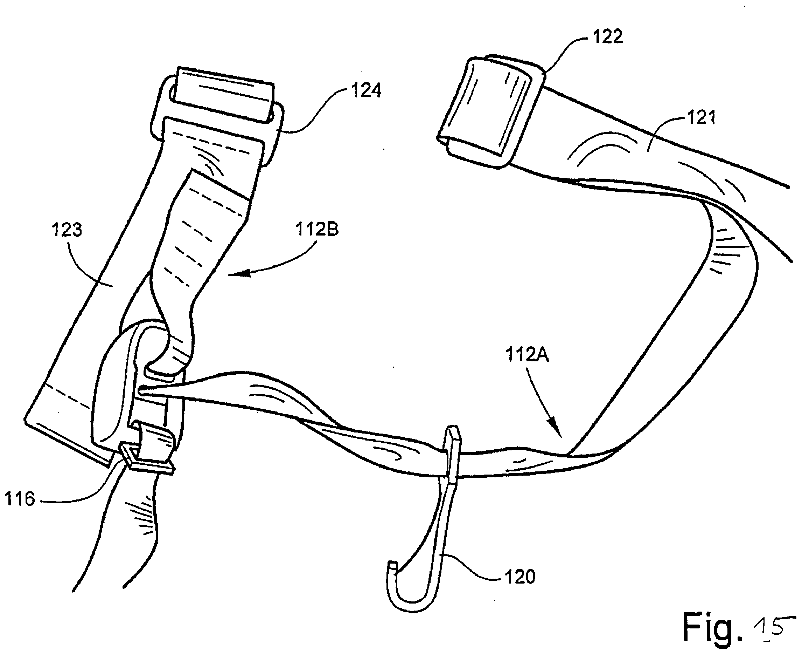

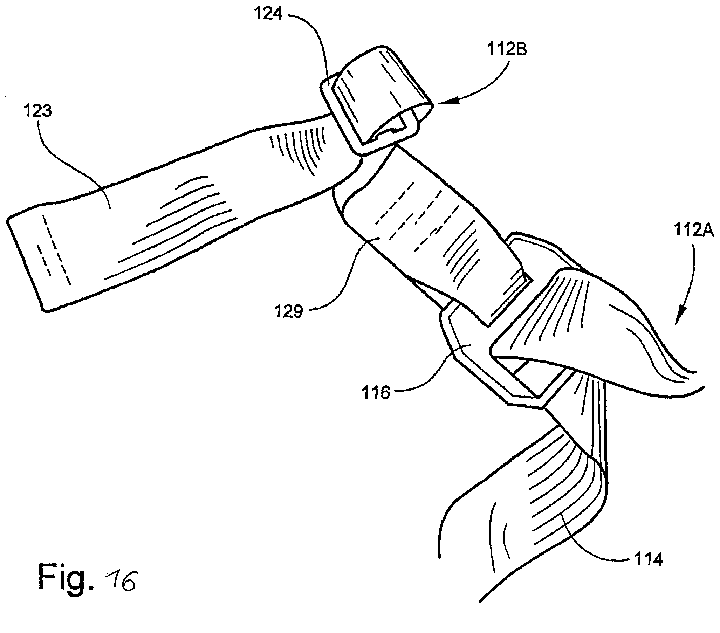

FIGS. 14-17 illustrate a second exemplary embodiment of a tether 110 for use with a child safety seat. It is similar in general construction to the tether 10 described above, and its main components are first and second portions 112A and 112B of webbing, for example nylon or other suitable flexible material. A free end 114 of the first webbing portion 112A is routed through an adjuster 116 of a known type, and then extends laterally to form a loop 118. A hook 120 slides along this loop 118. The first webbing portion 112A is routed through a first slide 122 of a known type, such as a 3-bar slide, and then doubled back to form a first pigtail 121, with an end doubled over as a stop 125 The second webbing portion 112B has one end anchored at a fixed connection to the adjuster 116. The other end is routed through a second slide 124, and then doubled back to form a second pigtail 123, with an end doubled over as a stop 127. Lines of stitching 129 (see FIG. 14) may be provided in the webbing 112 to secure the pigtails 121 and 123 to the webbing 112 and thus prevent the slides 122 and 124 from moving along the webbing 112 prior to an impact.

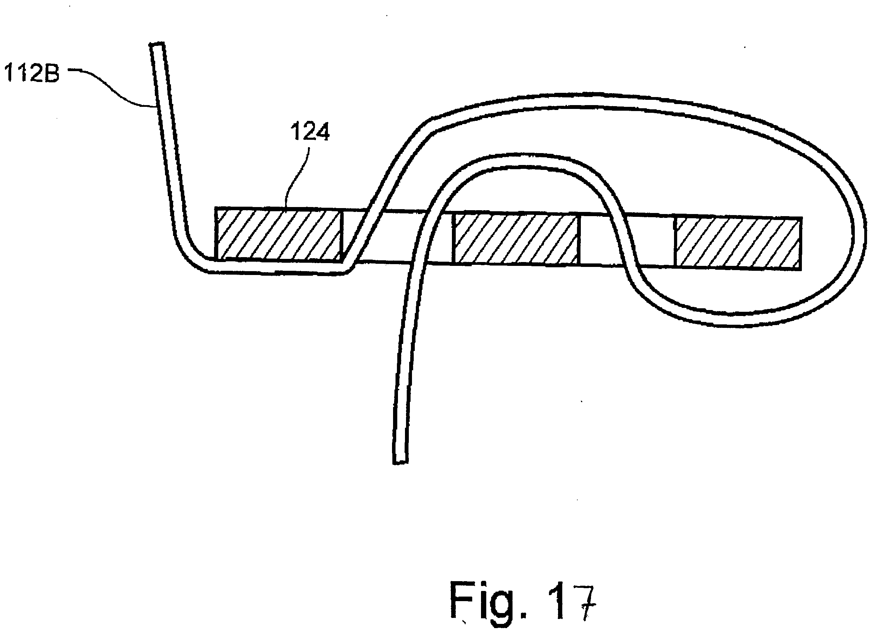

The webbing portions 112A and 112B are routed through the slides 122 and 124 in a configuration which provides adequate friction to the webbing 112 during sliding. This routing is depicted schematically in FIG. 17.

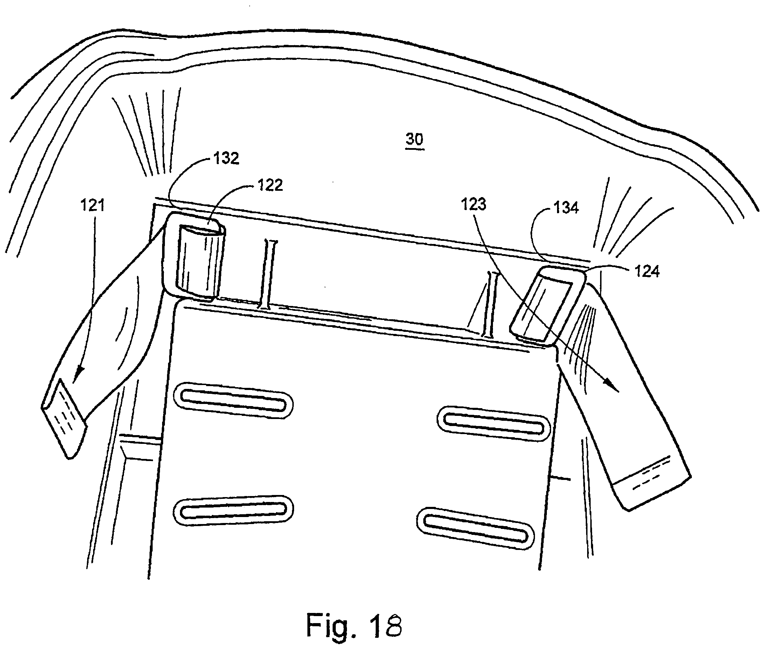

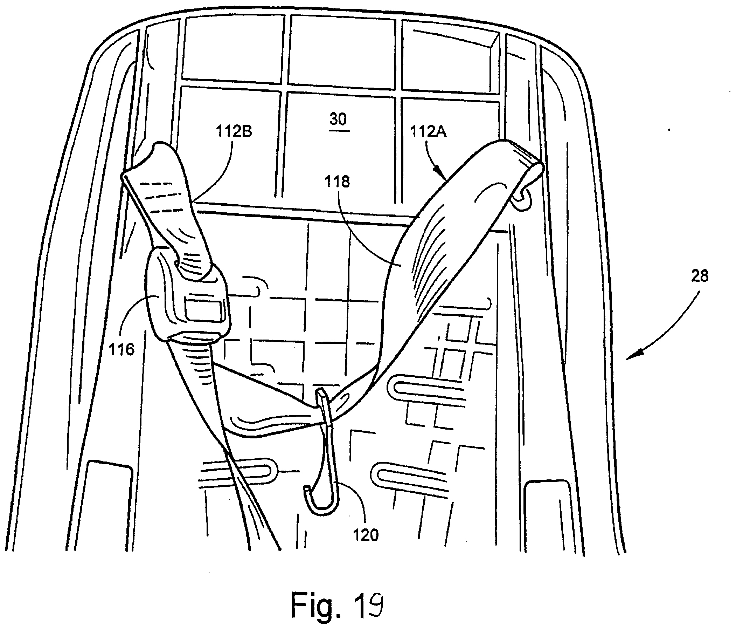

FIGS. 18 and 19 show how the tether 110 may be mounted to a child safety seat 28 which includes a backshell 30. The webbing portions 112A and 112B are routed through laterally-spaced-apart slots 132 and 134 in the backshell 30, which are large enough to accept the webbing 112 but smaller than the surface area of the slides 122 and 124. The slides 122 and 124 are disposed on the front side of the backshell 30 and are oriented so as to resist being pulled through the slots 132 and 134. The pigtails 121 and 123 extend freely on the front side of the backshell 30 (i.e. inside the seat 28).

In use, child safety seat 28, 350 is secured to a vehicle anchor point (such as an upper LATCH anchor, not shown) and by means of the L-shaped pivoting link. The free end 114 of the first webbing portion 112A is then pulled through the adjuster 116 to set the length of the loop 118 to the desired tension. In an accident, tension loads will be placed on the loop 118 and the hook 120 as the vehicle decelerates. The webbing 112 stretches as with a conventional tether. The webbing portions 112A and 112B will also slip through the slides 122 and 124 when the stitching 129 breaks, tending to increase the length of the loop 118 and shorten the pigtails 121 and 123. This absorbs some energy by overcoming friction and allowing the length of the loop 118 to increase. The total slippage is restricted by the stops 125 and 127 contacting the backshell 30 (see FIG. 19).

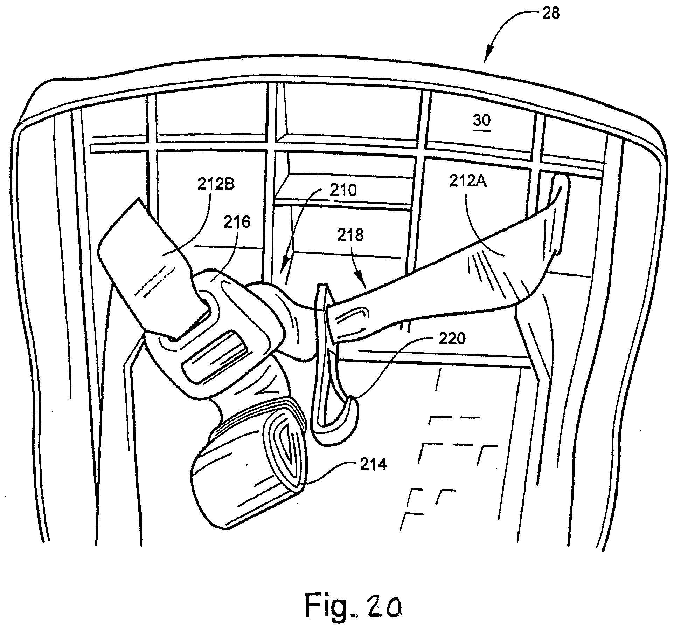

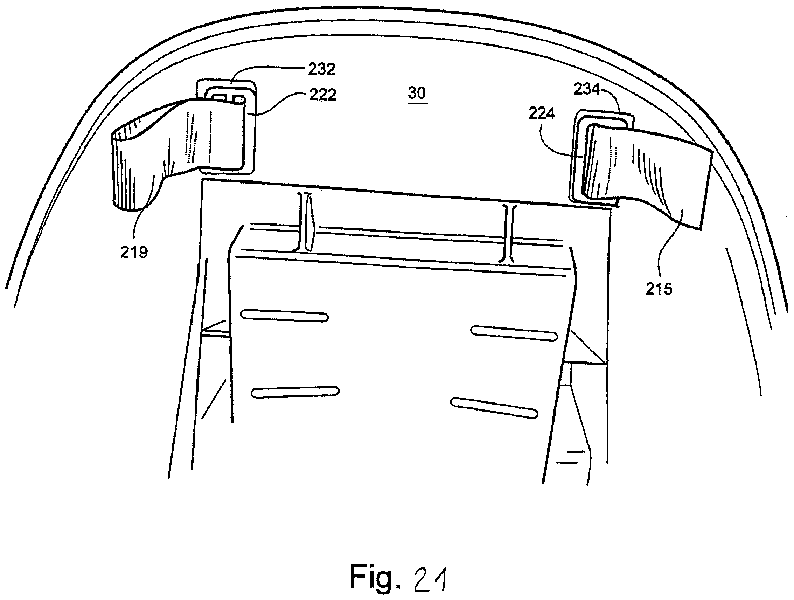

FIGS. 20-22 illustrate a third exemplary embodiment of a tether 210 for use with a child safety seat. It is similar in general construction to the tether 110 described above, and its main components are first and second portions 212A and 212B of webbing, for example nylon or other suitable flexible material. A free end 214 of the first webbing portion 212A is routed through an adjuster 216 of a known type, and then extends laterally to form a loop 218. A hook 220 slides along this loop 218. The first webbing portion 212A is routed through a first slide 222 of a known type, such as a 3-bar slide (see FIG. 21). The second webbing portion 212B has one end anchored at a fixed connection to the adjuster 216. The other end is routed through a second slide 224.

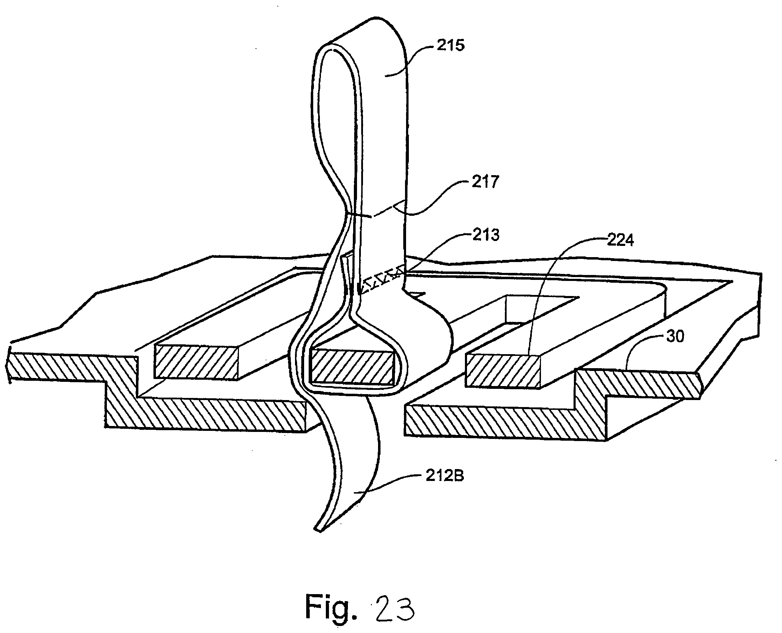

The webbing portions 212A and 212B are routed through the slides 222 and 224. FIG. 23 is a schematic depiction of the routing of the second webbing portion 212B, which is representative of the routing of the other webbing portion 212A. The second webbing portion 212B is looped over the central bar of the second slide 224 and anchored thereto, for example by using a strong pattern of permanent stitching depicted at 213. The free end of the webbing portion 212B is formed into a slack loop 215 which is secured to the remainder of the webbing portion 212B by a frangible connection such as a single stitching line, depicted at 217. A similar slack loop 219 (see FIG. 21) is formed in the first webbing portion 212A.

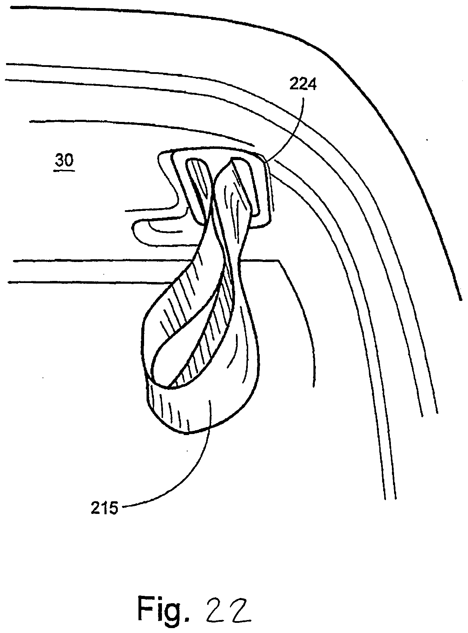

FIG. 22 shows how the tether 210 may be mounted to a child safety seat 28 which includes a backshell 30. The webbing portions 212A and 212B are routed through laterally-spaced-apart slots 232 and 234 in the backshell 30, which are large enough to accept the webbing 212 but smaller than the surface area of the slides 222 and 224 The slides 222 and 224 are disposed on the front side of the backshell 30 and are oriented so as to resist being pulled through the slots 232 and 234 The slack loops 215 and 219 and extend freely on the front side of the backshell 30 (i.e. inside the seat 28).

In use, child safety seat 28 is secured to a vehicle anchor point (such as an upper LATCH anchor, not shown) and by means of the L-shaped pivoting link. The free end 214 of the first webbing portion 212A is then pulled through the adjuster 216 to set the length of the loop 218 to the desired tension. In an accident, tension loads will be placed on the loop 218 and the hook 220 as the vehicle decelerates. The webbing 212 stretches as with a conventional tether. The webbing portions 212A and 212B will also slip through the slides 222 and 224 when the frangible connection 217 breaks, tending to increase the length of the loop 218 and pull out the slack loops 215 and 219. This absorbs some energy by overcoming friction and allowing the length of the loop 218 to increase. The total slippage is restricted by the secure anchorage of the webbing portions 212A and 212B to the slides 222 and 224.

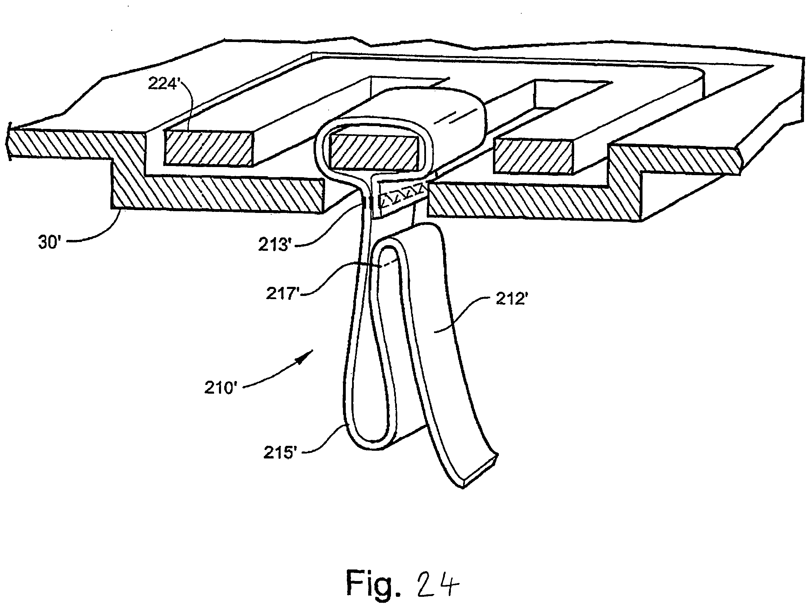

FIG. 24 is a schematic depiction of a tether 210' similar to the tether 210 but using an alternative routing of webbing 212'. In this embodiment, webbing 212' is looped over the central bar of the a slide 224' and anchored thereto, for example by using a strong pattern of permanent stitching depicted at 213'. Downstream of the slide 224', the webbing 212' is formed into a slack loop 215' which is secured to the remainder of the webbing 212' by a frangible connection such as a single stitching line, depicted at 217'. When anchored in a backshell 30, the slack loop 215' and the free end of the webbing 212' both extend from the rear side of the backshell 30. In an accident, the frangible connection 217' will break, tending to increase the length of the tether 210' and pull out the slack loop'. This absorbs some energy by allowing the length of the webbing 212' available for stretching to increase. The total slippage is restricted by the secure anchorage of the webbing 212' to the slide 224'.

An important benefit of the tethers described above over prior art tethers is the ability of the webbing to slip through the slides and/or increase its length upon impact. This provides energy absorption benefits in two ways. First, energy is used to overcome friction as the webbing slips through the slides as described above. Second, by allowing more webbing to slip through the slides, the total length of webbing that is available to stretch is greater than the amount available if slipping did not occur. More webbing stretch or elongation allows for greater energy absorption.

The foregoing has described an energy-absorbing tether for a child safety seat. While specific embodiments of the present invention have been described, it will be apparent to those skilled in the art that various modifications thereto can be made without departing from the spirit and scope of the invention. The principles of allowing webbing to slide with frictional resistance and/or of providing additional tether length for stretching in a crash are not limited to a tether strap having two mounting points. It may be applied to a tether having a single mounting point, or other kinds of straps and harnesses used with child safety seats. Accordingly, the foregoing description of the preferred embodiment of the invention and the best mode for practicing the invention are provided for the purpose of illustration only and not for the purpose of limitation.

As a preferred embodiment, the child safety seat according to the invention incorporates the L-shaped pivoting link as well as the top-tether. The benefit of a combination of both functionalities is that the movement of the child in case of an accident will slow down since a superposition of both movements, i.e. downward pressing into the vehicle seat as well as ripping the stitch of the top-tether will absord more energy than the individual movement.

The reason for this benefit is that the displacement ε according to fig. 7 will be minimized by utilizing the top-tether in addition to a deceleration caused by the rupture of the stitches or the breakage of the frangible connection.

## Claims

1. A child safety seat comprising:
a child seat structure (350), the child seat structure having a base support surface (332) for resting on a vehicle seat cushion (312), a back support surface (334) for abutting against the seat back (314) of said vehicle seat (310) and a seating surface (343) for a child occupant, together with a rigid link (352,354) projecting from the child seat structure (350) between the base support surface (332) and the back support surface (334), and a releasable connector (338) mounted on the rigid link (352,354) for engagement with a standard anchorage unit (316) associated with the vehicle seat (310), the rigid link (352,354) is attached directly to the child seat structure (350) solely by a pivot connection (356) that permits angular movement of the child seat structure relative to the rigid link about a single axis located above the base support surface (332), wherein the rigid link is L-shaped with a first limb (352) carrying the corresponding connector and a second limb (354) having a free end pivotally attached to the child seat structure (350),
**characterized in that**
an energy absorbing tether (210, 210') comprising a webbing (212, 212') with a frangible connection is provided located on the seat back portion for restraining the child safety seat to said vehicle seat (310), wherein the webbing (212, 212') with the frangible connection is configured such that the frangible connection breaks under crash loads causing the length of the energy absorbing tether (210, 210') to increase.

2. A child safety seat according to claim 1, wherein the rigid link (352,354) is pivotally attached to the child seat structure (350) by said pivot connection (356) above said seating surface (343).

## Patentansprüche

1. Kindersitz, der aufweist:
eine Kindersitzstruktur (350), wobei die Kindersitzstruktur eine Basisstützfläche (332) zur Auflage auf einem Fahrzeugsitzkissen (312), eine Rückenstützfläche (334) zum Anschlagen gegen die Sitzlehne (314) des Fahrzeugsitzes (310) und eine Sitzfläche (343) für einen Kind-Insassen aufweist, zusammen mit einer starren Verbindung (352, 354), die von der Kindersitzstruktur (334) zwischen der Basisstützfläche (332) und der Rückenstützfläche (334) vorsteht, und ein lösbares Verbindungsstück (338), das an der starren Verbindung (352, 354) zum Eingreifen in eine standardmäßige Verankerungseinheit (316), die zu dem Fahrzeugsitz (310) gehört, angebracht ist, wobei die starre Verbindung (352, 354) direkt an der Kindersitzstruktur (350) nur durch eine Drehzapfenverbindung (356) befestigt ist, die eine Winkelbewegung der Kindersitzstruktur relativ zu der starren Verbindung um eine einzige Achse herum gestattet, die sich über der Basisstützfläche (332) befindet, wobei die starre Verbindung L-förmig ist, mit einem ersten Glied (352), das das entsprechende Verbindungsstück trägt, und einem zweiten Glied (354), dessen freies Ende schwenkbar an der Kindersitzstruktur (350) befestigt ist,
**dadurch gekennzeichnet, dass**
ein energieabsorbierender Haltegurt (210, 210'), der ein Gurtband (212, 212') mit einer zerbrechlichen Verbindung aufweist, bereitgestellt wird, der sich an dem Sitzrückenabschnitt befindet, um den Kindersitz an dem Fahrzeugsitz (310) zu halten, wobei das Gurtband (212, 212') mit der zerbrechlichen Verbindung so konfiguriert ist, dass die zerbrechliche Verbindung unter Kollisionsbelastung bricht, wodurch veranlasst wird, dass sich die Länge des energieabsorbierenden Haltegurts (210, 210') vergrößert.

2. Kindersitz nach Anspruch 1, wobei die starre Verbindung (352, 354) durch die Drehzapfenverbindung (356) über der Sitzfläche (343) schwenkbar an der Kindersitzstruktur (350) befestigt ist.

## Revendications

1. Siège de sécurité pour enfant comprenant :
une structure (350) de siège pour enfant, la structure de siège pour enfant ayant une surface (332) de support de base pour reposer sur un coussin (312) de siège de véhicule, une surface (334) de support de dos pour buter contre le dossier (314) de siège dudit siège (310) de véhicule, et une surface (343) d'assise pour un occupant enfant, ensemble avec une liaison rigide (352, 354) se projetant depuis la structure (350) de siège pour enfant entre la surface (332) de support de base et la surface (334) de support de dos, et un connecteur (338) libérable monté sur la liaison rigide (352, 354) pour engagement avec une unité d'ancrage standard (316) associée avec le siège (310) de véhicule, la liaison rigide (352, 354) est fixée directement à la structure (350) de siège pour enfant uniquement par une connexion à pivot (356) qui permet un mouvement angulaire de la structure de siège pour enfant par rapport à la liaison rigide autour d'un axe unique situé au-dessus de la surface (332) de support de base, dans lequel la liaison rigide est en forme de L avec un premier bras (352) supportant le connecteur correspondant et un deuxième bras (354) ayant une extrémité libre fixé pivotant à la structure (350) de siège pour enfant,
**caractérisé en ce que**
une fixation (210, 210') à absorption d'énergie comprenant une sangle (212, 212') avec une connexion cassante est prévue située sur la partie de dossier de siège pour retenir le siège de sécurité pour enfant sur ledit siège (310) de véhicule, dans lequel la sangle (212, 212') avec la connexion cassante est configurée de telle façon que la connexion cassante se rompt sous des forces d'impact faisant que la longueur de la fixation (210, 210') à absorption d'énergie s'accroit.

2. Siège de sécurité pour enfant selon la revendication 1, dans lequel la liaison rigide (352, 354) est fixée pivotante à la structure (350) de siège pour enfant par ladite connexion à pivot (356) au-dessus de ladite surface (343) d'assise.
